# EUROPEAN PATENT SPECIFICATION

(11) **EP 2 380 226 B1**
(45) Date of publication and mention of the grant of the patent: **09.03.2016**
(21) Application number: 09801348.5
(22) Date of filing: 18.12.2009
(51) Int. Cl.: H01M 2/22, H01M 2/34, H01M 10/42, H01M 10/052, H01M 10/058, H02J 7/00, H01M 2/12

(54) **MODULAR CID ASSEMBLY FOR A LITHIUM ION BATTERY**
MODULARE CID-BAUGRUPPE FÜR EINE LITHIUMIONENBATTERIE
ENSEMBLE CID MODULAIRE POUR BATTERIE LITHIUM-ION

(30) Priority: 03.04.2009 US 166580 P; 19.12.2008 US 203157 P
(43) Date of publication of application: 26.10.2011
(73) Proprietor: Boston-Power, Inc., Westborough, MA 01581 (US)
(72) Inventor: ELIA, Mimmo, Belmont MA 02478 (US); LINNA, Jan-Roger, Boston MA 02115 (US); PARTIN, Phillip, E., Grafton MA 01560 (US); KAIRAWICZ, Raymond, G., Watertown CT 06795 (US)
(74) Representative: Suèr, Steven Johannes
(86) International application number: PCT/US2009/068679
(87) International publication number: WO 2010/080588

(56) References cited:
- EP-A1- 0 959 508
- EP-A2- 0 930 662
- WO-A1-98/45888
- WO-A1-2009/002438
- WO-A2-2008/002487
- JP-A- 10 172 528
- US-A- 4 025 696
- US-A1- 2006 275 657

## Description

### RELATED APPLICATION(S)

This application claims the benefit of U.S. Provisional Application No. 61/203,157, filed on December 19, 2008 and U.S. Provisional Application No. 61/166,580, filed April 3, 2009.

### BACKGROUND OF THE INVENTION

Li-ion batteries in portable electronic devices typically undergo different charging, discharging and storage routines based on their use. Batteries that employ Li-ion cell chemistry will produce gas when they are electrically overcharged beyond established safety limits. This gas may be used to trigger pressure activated safety devices to improve the reliability and safety of batteries. A current interrupt device (CID) is typically employed to provide protection against any excessive internal pressure increase in a battery by interrupting the current path from the battery when pressure inside the battery is greater than a predetermined value. For example in US2006/0275657. The

CID typically includes a rupture disc and a pressure disc in electrical communication with each other. The rupture disc and the pressure disc are, in turn, in electrical communication with an electrode and a terminal of the battery, respectively. The pressure disc separates from (e.g., deforms away or is detached from) the rupture disc of the CID when pressure inside the battery is greater than a predetermined value, whereby a current flow between the electrode and the terminal is interrupted.

Generally, however, CIDs known in the art activate at a relatively high pressure, for example, at an internal gauge pressure greater than about 15 kg/cm2. Typically, when any excessive internal pressure increase that triggers such CID activation occurs, the internal temperature of the battery is also relatively high, causing additional safety issues.

Further, CIDs typically are fabricated in conjunction with fabrication of the remainder of the battery and require a low tolerance for variation to ensure activation at an appropriate pressure. In some designs the surface area available for welding of a tab from the jelly roll of a battery typically is limited due to need to provide gas pressure conduits. The gas pressure conduits in the disc often includes at least one through-hole that must not be blocked during welding of a tabs from the jellyroll to the rupture disc.

Therefore, there is a need for CIDs for batteries, particularly relatively large lithium-ion batteries, that can reduce or minimize the aforementioned problems.

### SUMMARY OF THE INVENTION

The present invention generally is directed to a modular current interrupt device, a battery that includes a modular current interrupt device of the invention, and a method of forming a modular current interrupt device of the invention.

The modular current interrupt device includes an electrically-conductive rupture disc and an electrically-conductive pressure disc attached to the rupture disc to form an electrical pathway. An electrically-insulating ring partitions a perimeter of the rupture disc from a perimeter of the pressure disc. A seating element of the current interrupt device secures the electrically-insulating ring to the pressure disc.

The rupture disc and the electrically-insulating ring define a conduit, whereby exposure of one side of the pressure disc to sufficient pressure through the conduit will cause the pressure disc to separate from the rupture disc to thereby sever the electrical pathway.

In another embodiment, the invention is a battery that includes a modular current interrupt device, wherein the current interrupt device includes an electrically-conductive rupture disc and an electrically-conductive pressure disc attached to the rupture disc to form an electrical pathway. An electrically-insulating ring partitions a perimeter of the rupture disc from the perimeter of the pressure disc. A seating element of the current interrupt device secures the electrically-insulating ring to the pressure disc. At least one of the rupture disc and the electrically-insulating ring define a conduit, whereby exposure of one side of the pressure disc to sufficient pressure through the conduit will cause the pressure disc to separate from the rupture disc to thereby sever an electrical pathway.

In still another embodiment, a method of forming a modular current interrupt device includes combining a pressure disc and a seating element of the current interrupt device, and combining a rupture disc and an electrically-insulating ring. The combined pressure disc and seating element and the combined rupture disc and electrically-insulating ring are then assembled, and the rupture disc is laser or resistance spot welded to the pressure disc to form an electrical pathway therebetween.

This invention has many advantages. For example, the modular current interrupt device can be fabricated separately from the lithium ion battery, thereby significantly reducing the costs of fabrication of the battery and increasing the types of applications to which the modular CID can be applied. Further, the modular CID includes a significantly increased surface area relative to typical conventional current interrupt devices for welding a tab from a cell jellyroll and, consequently, significantly increasing battery yield during production. In addition, because a conduit is defined by both a pressure disc and an electrically-insulating ring, the pressure disc does not need to include through-holes to allow passage of gas, thereby eliminating the likelihood of blockage of the hole during welding of a tab from a cell jellyroll. Also, the modular current interrupt device of the invention can be universal in at least one orientation, such as by having a circular shape, thereby eliminating the need to orient the current interrupt device during assembly. The likelihood of error during fabrication and consequent rejection during quality checks is thereby significantly reduced. A beveled edge on the rupture disc, in one embodiment, defines a channel and provides a means to mechanically secure the rupture disc to an electrically-insulating ring of the current interrupt device, thereby eliminating the need for the rupture disc to define through-holes to communicate gas pressure to the pressure disc.

### BRIEF DESCRIPTION OF THE DRAWINGS

FIGURE 1 is a cross-sectional view of one embodiment of a modular current interrupt device of the invention.
FIGURES 2A AND 2B are plan and cross sectional views, respectively, of an electrically-conductive rupture disc component of the modular current interrupt device of Figure 1.
FIGURES 3A and 3B are plan and cross sectional views, respectively, of an electrically-conductive pressure disc component of the modular current interrupt device of Figure 1.
FIGURES 4A, 4B and 4C are perspective, cross-sectional and plan views of one embodiment of an electrically-insulating ring component of the modular current interrupt device of Figure 1.
FIGURE 5 is a partial cross-sectional view of the modular current interrupt device of Figure 1, taken along line V-V.
FIGURES 6A and 6B are cross-sectional and plan views, respectively, of a seating element component of the modular current interrupt device of Figure 1.
FIGURES 7A through 7D show steps in one method of the invention to fabricate one embodiment of the modular current interrupt device of the invention.
FIGURE 8A, 8B and 8C are exterior, cross sectional, and interior views of a lid of a prismatic battery cell showing a modular current interrupt device affixed to the lid.
FIGURE 9 is a cross sectional view of a prismatic battery cell of the invention, showing a modular current interrupt device of the invention, also in cross section, set in place in the lid.

### DETAILED DESCRIPTION OF THE INVENTION

The foregoing will be apparent from the following more particular description of example embodiments of the invention, as illustrated in the accompanying drawings in which like reference characters refer to the same parts throughout the different views. The drawings are not necessarily to scale, emphasis instead being placed upon illustrating embodiments of the present invention.

The invention generally is directed to a modular current interrupt device for a battery, such as a lithium ion battery, and, particularly, a prismatic lithium ion battery. In another embodiment, the invention is a battery that includes the modular current interrupt device. In still another embodiment, the invention is a method of fabricating a modular current interrupt device.

As used herein, the "terminals" of the batteries of the invention mean the parts or surfaces of the batteries to which external electric circuits are connected. Also, as used herein, the phrases "electrically connected" or "in electrical communication" or "electrically contacted" mean certain parts are in communication with each other by flow of electrons through conductors, as opposed to electrochemical communication which involves flow of ions, such as Li⁺, through electrolytes.

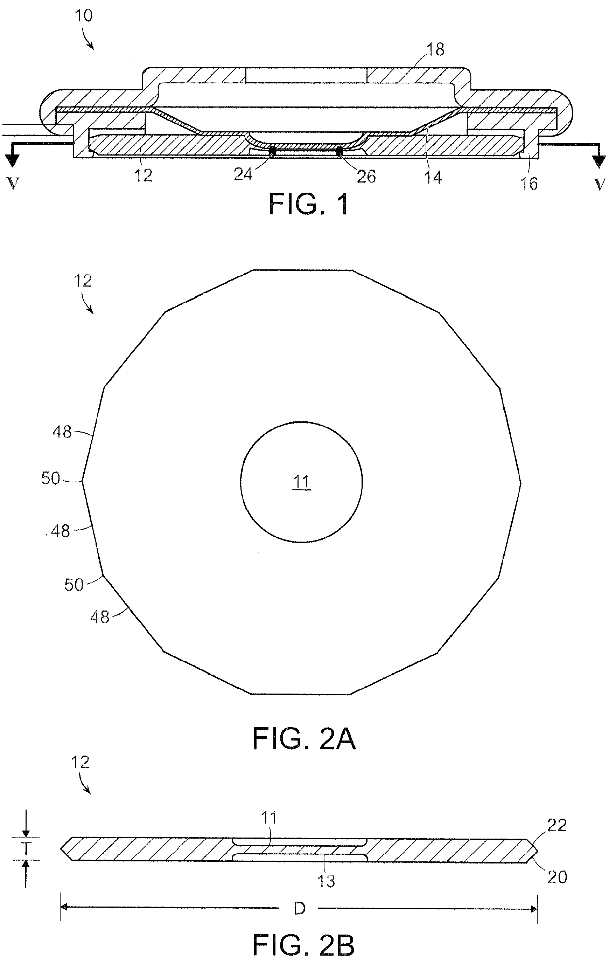

FIG. 1 is a cross-sectional view of one embodiment of modular current interrupt device 10, and includes electrically-conductive rupture disc 12, electrically-conductive pressure disc 14, electrically-insulating ring 16, and seating element 18.

As shown in FIG. 2A and 2B, electrically-conductive rupture disc 12 includes central recessed portions 11, 13 recessed portions each of which, independently, have a depth in a range of between about 0.16mm and about 0.26mm, and a width in a range of between about 2.95mm and about 3.05mm. Electrically-conductive rupture disc 12, as shown in FIG. 2A, is a polygon. Although shown having fourteen sides in FIG. 2A, electrically-conductive rupture disc 12 typically can have between about 10 and 20 sides 48. Sides 48 of electrically-conductive rupture disc 12 intersect and thereby define retention points 50. Optionally, or alternatively, rupture disc 12 includes vent through-holes, not shown. Beveled edges 20, 22 of rupture disc 12 have an angle to a major plane of rupture disc 12 that is typically in a range of between about 40 degrees and 55 degrees. Preferably, the angle of beveled edges 20, 22 is in a range of between about 45° and about 49°, and most preferably is about 47°. Typically, rupture disc 12 has a major diameter D in a range between about 6mm and about 16mm and a thickness T in a range between about 0.3mm and 0.7mm. Preferably, rupture disc 12 has a diameter of about 11mm and a thickness of about 0.5mm. The thickness of rupture disc 12 at recessed portions 11, 13 generally is in a range of between about 0.065mm and preferably about 0.085mm. Rupture disc 12 is fabricated of a suitable material. Examples of suitable materials include aluminum, nickel and copper. Examples of suitable materials include Aluminum 3003 series, such as Aluminum 3003 H-0 or H-14 series, and preferably H-14 series.

Referring back to FIG. 1, electrically-conductive pressure disc 14 is attached to electrically-conductive rupture disc 12 at weld points 24, 26. Optionally, electrically-conductive pressure disc 14 can be connected to electrically-conductive rupture disc 12 without any weld points, a single weld point, or three or more weld points. Typically, the weld points are spot welds. Preferably the spot welds are separated from each other. In a particularly preferred embodiment the spot welds include aluminum.

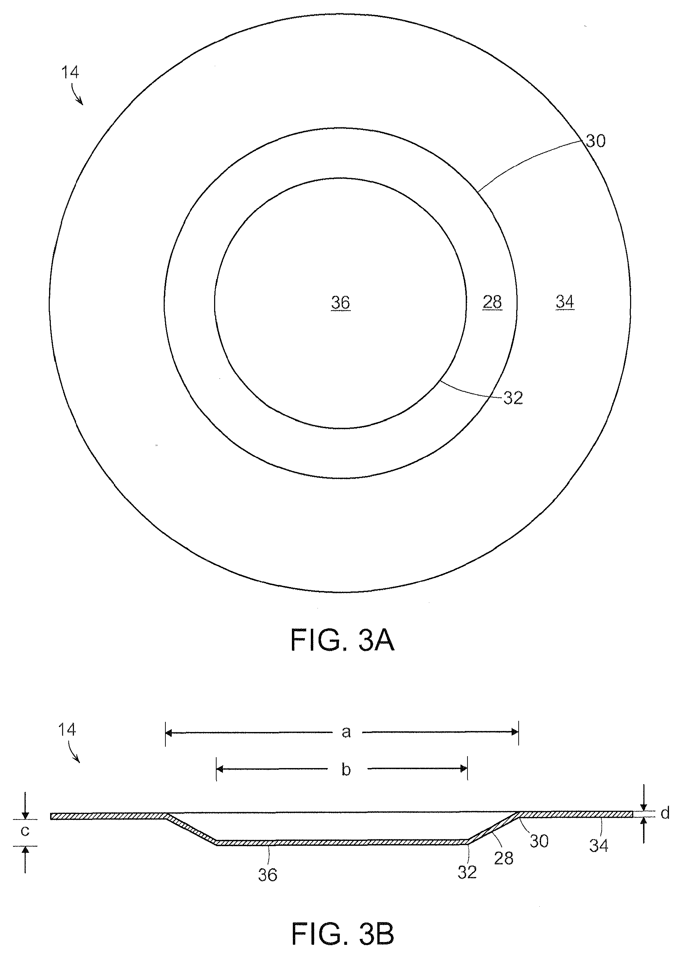

Although other configurations of electrically-conductive pressure discs can be employed in the modular current interrupt device of the invention, electrically-conductive pressure disc 14, as shown in FIG. 3A and 3B, preferably includes frustum 28. Frustum 28 has first end 30 and second end 32. First end 30 has a broader diameter than second end 32. Electrically-conductive pressure disc 14 also includes base 34 extending radially from a perimeter of first end 30 of frustum 28. Cap 36 seals second end 32 of frustum 28. As used herein, the term "frustum" means the basal wall part (excluding the bottom and top ends) of a solid right circular cone (i.e., solid generated by rotating a right triangle about one of its legs) the top of which is cut off. In one embodiment, cap 36 is essentially planar.

As used herein, the term "essentially planar or cap" means a surface that sufficiently resembles a plane so as to potentially contact another planar surface randomly at one or more points and to which the surface can be fused by a suitable means, such as by spot welding. In some embodiments, despite deformation caused by fabrication of pressure disc 14 or by assembly to form modular current interrupt device 10, FIG. 1 (e.g., by welding electrically-conductive rupture disc 12 to electrically-conductive pressure disc 14), cap 36 nevertheless is considered to be essentially planar.

A forming pin deforms both 36 cap on pressure disc 14 and coined feature 11 on rupture disc 12 at the same time. Next, pressure disc 14 is attached to rupture disc 12 to form an electrically conductive pathway. Preferably, pressure disc 14 and rupture disc 12 are spot welded together with the number of weld spot locations in the range of between 1 and about 6, such as 2 weld spots. Preferably, laser welding is used. Preferably, the laser welding equipment is set-up to hit each weld spot in rapid succession with multiple repeated laser pulses. The energy of each of the repeated laser pulses is adjusted so that the combined energy of all repeated laser pulses in one weld spot is sufficient to locally melt the aluminum in pressure disc 14 and rupture disc 12, thereby binding them metallically together in a weld spot. The advantage of using multiple repeated laser pulses is that the variation in the total laser energy provided to each weld spot is significantly reduced, thereby creating less variation in the spot weld strength, compared to using a single laser pulse of higher power.

Preferably, cap 36 and/or base 34 each, independently, has a thickness of material (indicated with reference character "d" in Figure 3B) in a range between or about 0.05 mm and about 0.5 mm such as between about 0.05 mm and about 0.3 mm, between about 0.05 mm and 0.2 mm, between about 0.05 mm and about 0.15 mm (e.g., about 0.127 mm) or about 5 milli-inches.

Preferably, the diameter of cap 36 (indicated with reference character "b" in FIGS. 3A and 3B) is in a range of between about 2 mm and about 10 mm, more preferably between 5 mm and about 10 mm, even more preferably between about 5 mm and about 10 mm even more preferably between about 5 mm and about 8 mm (e.g., between about 0.20 inches and 0.25 inches) such as about 5.5 mm (or about 0.215 inches).

Preferably, the height of cap 36 from base 34 (indicated with reference character "c" in FIG. 3B) is in a range of between about 0.5 millimeter and about 1 millimeter, more preferably between about 0.55 millimeter and about 0.65 millimeter, such as about 0.596 millimeter (or about 0.024 inch).

Preferably, frustum 28 has an angle relative to a plane parallel to base 34 in a range of between about 15 degrees and about 25 degrees, such as between about 18 degrees and about 23 degrees, or between about 19 degrees and about 21 degrees. More preferably, frustum 28 has an angle of about 21 degrees relative to a plane parallel to base 34. Preferably, frustum 28 has a diameter ratio of first end 30 to second end 32 (i.e., ratio of "b" to "a" in FIG. 3B) in a range of between about 1:1.20 and about 1:1.35, such as between about 1:1.23 and about 1:1.28.

Referring back to FIG. 1, electrically-conductive rupture disc 12 and electrically-conductive pressure disc 14 separate when an internal gage pressure applied to a surface of electrically-conductive pressure disc 14 contacting electrically-conductive rupture disc 12 is in a range of between about 4 kg/cm² and about 10 kg/cm², such as between about 4kg/cm² and about 9 kg/cm² between about 5 kg/cm² and about 9 kg/cm² or 7 kg/cm² and about 9 kg/cm². Separation of electrically-conductive pressure disc 14 from electrically-conductive rupture disc 12 activates modular current interrupt device 10. As used herein, "activation" of modular current interrupt device 10 means that current flow between electrically-conductive rupture disc 12 and electrically-conductive pressure disc 14 is interrupted. Preferably, when electrically-conductive pressure disc 14 separates from electrically-conductive rupture disc 12, the integrity of electrically-conductive pressure disc 14 is maintained, whereby pressure disc 14 does not fracture or otherwise permit gas to flow from one side of pressure disc 14 to another side of pressure disc 14. Typically, separation of pressure disc 14 from rupture disc 12 causes fracture of any spot welds electrically connecting pressure disc 14 to rupture disc 12.

Pressure disc 14 can be formed of a suitable metal such as aluminum, copper and nickel. An example of suitable aluminum is Aluminum 3003 series, such as Aluminum 3003 H-0 or H-14 series. Preferably, the pressure disc 14 includes aluminum and, more preferably, consists essentially of aluminum.

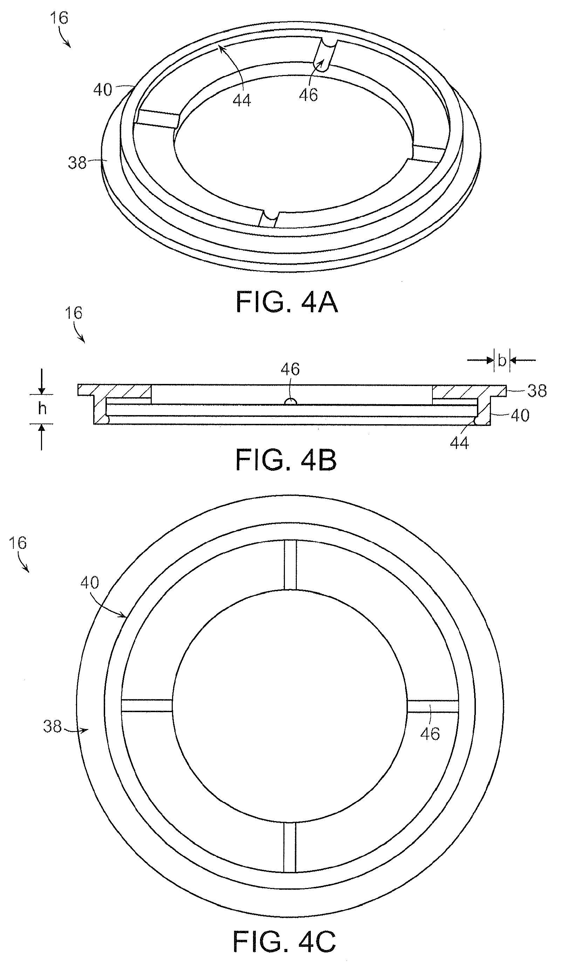

Electrically-insulating ring 16 partitions a perimeter of rupture disc 12 from a perimeter of pressure disc 14. Referring to FIGS. 4A, 4B and 4C, electrically-insulating ring 16 includes base 38 and rim 40. Typically, rim 40 is spaced from perimeter of base 38 by a distance "b" in a range between about 0.40 mm and about 0.55mm. Rim 40 typically has a height "h" in a range of between about 0.80mm and about 0.90mm. Lip 44 extends from rim 40 and overlaps electrically-conductive rupture disc 12. In one embodiment, lip 44 contacts rupture disc 12 to thereby cause an interference fit between base 38 and rupture disc 12. As shown in Figure 4A, electrically-insulating ring 16 defines channels 46 at base 38. In one embodiment, and as shown in FIG. 4C, at least one of channels 46 has a major axis that is essentially normal to a tangent of a circle defined by ring 16. Examples of suitable materials of electrically-insulating ring 16 include polypropylene, such as high-density polypropylene, and perfluoroalkoxy copolymer resin.

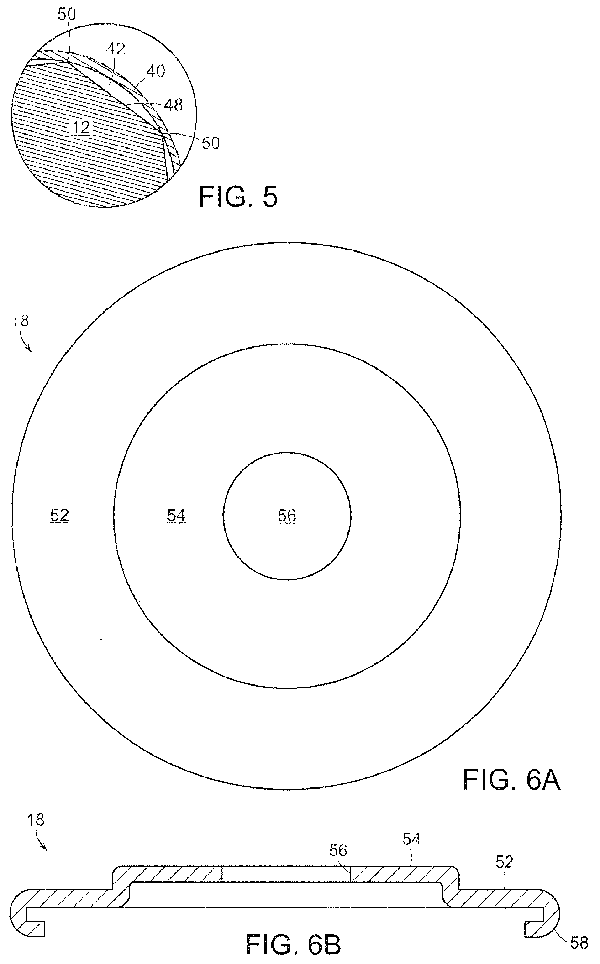

As can be seen in FIG. 5, points 50 of rupture disc 12 typically are in interfering relation with rim 40 of electrically-insulating ring 16. Sides 48 of electrically-conductive rupture disc 12 and rim 40 of electrically-insulating ring 16 define conduits 42 that provide fluid communication of gas pressure from one side of rupture disc 12 to the other side of rupture disc 12. Channels 46 of ring 16 also provide fluid communication between the major surfaces of rupture disc 12.

Seating element, or seating cup, 18 overlays pressure disc 14. Seating element 18, also shown in FIGS. 6A and 6B, includes base 52, and raised portion 54 that defines through-opening 56. Crimp 58 at periphery of seating element 18 secures pressure disc 14 to electrically-insulating ring 16. Optionally, seating element 18 can be secured to pressure disc 14 by welds (not shown) where seating element 18 contacts electrically-conductive pressure disc 14. Preferably the diameter of opening 56 is in a range of between about 2mm and about 4mm. Seating element 18 is fabricated of a suitable material, such as aluminum, nickel and copper. Preferably, seating element 18 is formed of metal and is electrically connected to pressure disc 14. In one embodiment, seating element 18 includes aluminum, and more preferably consists essentially of aluminum.

Alternatively, where pressure disc 14 is otherwise connected to an electrical terminal of a battery, such as a battery can, seating element 18 can be formed of an electrically insulating material, such as polypropylene. A plan view of seating element 18, shown in FIG. 6A, shows that seating element 18 is circular in configuration, whereby, in one embodiment, raised portion 54 essentially tracks base 34 of pressure disc 14. Typically, the thickness of the material employed to form seating element 18 is in a range of between about 0.3mm and about 0.5mm.

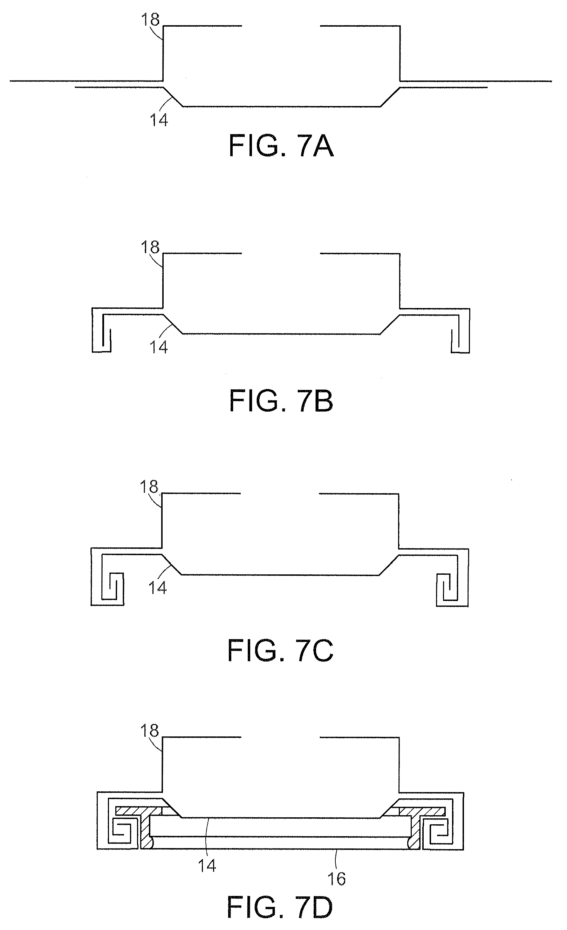

A method of fabricating a modular current interrupt device of the invention includes combining electrically-conductive pressure disc 14 with seating element 18, and combining electrically-conductive rupture disc 12 with electrically-insulating ring 16. The combined electrically-conductive pressure disc 14 and seating element 18, and combined electrically-conductive rupture disc 12 and electrically-insulating ring 16, are then secured to one another by mechanically or other means joining the electrically-conductive rupture disc 12 and electrically-conductive pressure disc 14 by a suitable method, such as by laser or resistance spot welding. The edges of seating element 18 can be crimped around the edges of pressure disc 14 and insulating ring 16. In another embodiment, shown in FIGS. 7A through 7D, pressure disc 14 and seating element 18 are combined, as shown in FIG. 7A, and then a single seam is formed by a suitable method, such as crimping, as shown in FIG.7B. Optionally, a suitable lining compound, such as a sealing material (e.g., an asphaltic-based sealing material) that is electrolyte-resistant, as is known in the art, can be placed between joining surfaces of pressure disc 14 and seating element 18. As shown in FIG. 7C, a double seam, as a hermetic seal, is then formed. Insulating ring 16 is then placed at pressure disc 14, and pressure disc 14 and seating element 18 are then crimped again to clamp down insulating ring 14. As shown in FIG. 7D, pressure disc 12 is then put into place, as shown in FIG. 1, and spot welded to pressure disc 14, as described above.

Preferably, electrically-conductive pressure disc 14 and electrically-conductive rupture disc 12 are made of substantially the same metals. As used herein, the term "substantially the same metals," means metals that have substantially the same chemical and electrochemical stability at a given voltage, e.g., the operating voltage of a battery. In one specific embodiment, at least one of electrically-conductive rupture disc 12 and electrically-conductive pressure disc 14 includes aluminum, such as Aluminum 3003 series. In one more specific embodiment, electrically-conductive pressure disc 14 includes aluminum which is softer than that of electrically-conductive rupture disc 12. Preferably, electrically-conductive pressure disc 14 and electrically-conductive rupture disc 12 both include aluminum. More preferably, rupture disc 12 is formed of Aluminum 3003 H-14 series and pressure disc 14 is formed of Aluminum 3003 H-0 series. Pressure disc 12 and rupture disc 14 can be made by any suitable method known in the art, such as, for example, stamping, coining, and/or milling techniques.

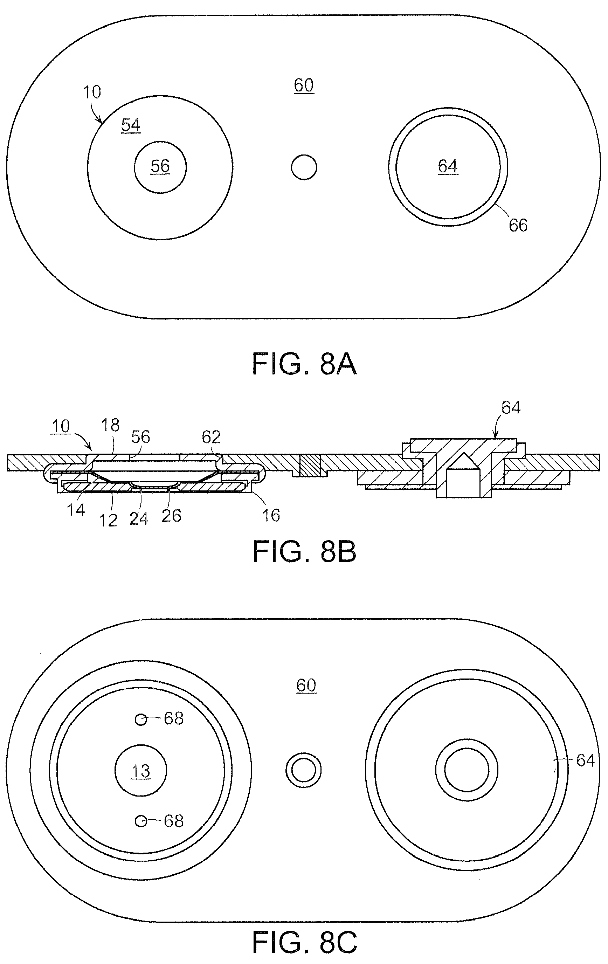

Figures 8A, 8B and 8C show, respectively, exterior plan, cross-sectional and interior plan views of a lid assembly of a battery that includes a modular current interrupt device of the invention. As can be seen in Figures 8A, 8B and 8C, current interrupt device 10 is set within through-opening 62 defined by lid 60 of a battery. The majority of modular current interrupt device 10 is located within the battery while raised portion 54 of seating element 18 resides within through-opening 62 of lid 60. Seating element 18 is fixed to lid 60 by a suitable method, such as by an interference fit, welding, crimping, riveting, etc. Preferably, seating element 18 and lid 60 are welded to each other. Any suitable welding technique known in the art can be used. Preferably, seating element 18 and lid 60 are hermetically joined. Preferably, a laser welding technique is employed in the invention. More preferably, a circumferential laser welding technique is employed to hermetically join seating element 18 and lid 60, for example, either by means of seam welding at the circumferential interface between two parts or by means of penetration welding at base 52 of seating element 18. Preferably, the welding is circumferentially placed around the middle of base 52 or the edge of base 52. Preferably, during the welding process, e.g., a laser welding process, a temperature of seating element 18 is controlled so as not to exceed the melting point of a surface of seating element 18 opposite the weld. Such temperature control can be obtained using any suitable cooling method known in the art. Preferably, lid 60 is fabricated out of substantially the same material as that of seating element 18, such as Aluminum 3003 H-0 or H-14 series.

As can be seen in Figure 8A, which is a plan view of the outside of lid 60 of a battery, raised portion 54 of seating element 18 is visible and essentially circular in configuration. Typically, seating element 18, as well as the remainder of lid 60 and a can of a battery to which lid 60 is electrically connected, serves as a positive terminal, whereas feed-through assembly 64, also shown in FIG. 8A through 8C, serves as the negative terminal of the battery and is electrically insulated by component 66 from the remainder of lid 60, from modular current interrupt device 10 and from a can of a battery to which lid 60 is electrically connected.

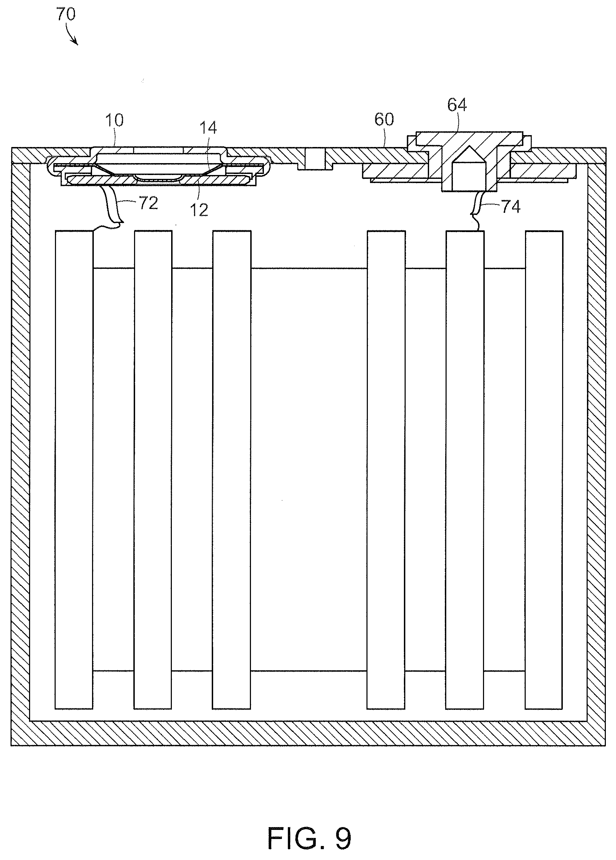

FIG. 9 shows a cross-sectional view of a battery 70 of the invention that includes lid 60, in which modular current interrupt device 10 is seated. Tab 72 connects one electrode, preferably a positive electrode, to rupture disc 14. Tab 72 can be joined to rupture disc 14 by a suitable method, such as laser or resistance spot welding. Tab 74 connects the other electrode to feed-through assembly 64, also by a suitable method, such a laser or resistance spot welding.

Optimally, the electrically conductive components of modular current interrupt device 10 can be formed of materials other than aluminum such as nickel-plated ion, particularly when the current interrupt device 10 is electrically connected to the anode of the battery, rather than the cathode.

While this invention has been particularly shown and described with references to example embodiments thereof, it will be understood by those skilled in the art that various changes in form and details may be made therein without departing from the scope of the invention encompassed by the appended claims.

## Claims

1. A modular current interrupt device for a battery, comprising:
a) an electrically-conductive rupture disc;
b) an electrically-conductive pressure disc attached to the rupture disc to form an electrical pathway;
c) an electrically-insulating ring partitioning a perimeter of the rupture disc from a perimeter of the pressure disc; and
d) a seating element, the seating element securing the electrically-insulating ring to the pressure disc, wherein the seating element is electrically conductive and electrically connected to the pressure disc; and
wherein the rupture disc and the electrically-insulating ring together define a conduit, whereby exposure of one side of the pressure disc to sufficient force through the conduit will cause the pressure disc to separate from the rupture disc to thereby sever the electrical pathway.

2. The current interrupt device of claim 1, wherein the rupture disc includes a plurality of retention points that form an interference fit with the electrically-insulating ring.

3. The current interrupt device of claim 2, wherein the perimeter of the rupture disc is a polygon.

4. The current interrupt device of claim 3, wherein the polygon defines the retention points.

5. The current interrupt device of claim 3, wherein the polygon has from 10 sides to 20 sides.

6. The current interrupt device of claim 5, wherein the polygon has 14 sides.

7. The current interrupt device of claim 1, wherein
a) the conduit is defined in part by the perimeter of the rupture disc, in which case, optionally, either:
i) wherein the perimeter of the rupture disc is beveled, or
ii), wherein the perimeter of the rupture disc includes a double bevel, in which latter case, optionally, wherein the angle of at least one of the bevels is in a range of between about 40 degrees and about 55 degrees, in which case, further optionally, wherein the angle of a least one of the bevels is about 47 degrees, in which case, yet further optionally, wherein the angle of both bevels is about 47 degrees; or
b) wherein the electrically insulating ring defines a lip at a periphery of the ring, whereby the lip overlaps the periphery of the rupture disc, in which case, optionally, wherein the rupture disc defines a groove at the periphery of the rupture disc, whereby the lip of the insulating ring overlaps the rupture disc at the groove, in which case, yet further optionally, wherein a surface of the lip of the insulating ring is essentially flush with a surface of the rupture disc; or
c) the electrically insulating ring defines at least one channel that, together with the rupture disc, defines at least a portion of the conduit, in which case, optionally, wherein the channel has a major axis that is essentially normal to a tangent of a circle defined by the electrically-insulating ring.

8. The modular current interrupt device of claim 1, wherein:
a) the rupture disc, the pressure disc and the seating element are aluminum; or
b) the electrically-insulating ring includes a polymer; or
c) the rupture disc defines at least one conduit; or
d) the electrically-insulating ring defines at least one conduit at a periphery of the ring, whereby fluid communication exists between the frustoconical component of the pressure disc and an external surface of the current interrupt device; or
e) wherein the pressure disc includes a frustoconical component, in which case, optionally, wherein the pressure disc further includes a distal surface and a peripheral base, the elevated surface being linked to the peripheral base by the frustoconical component, and wherein the rupture disc is electrically connected to the pressure disc at the elevated surface, in which case, further optionally, wherein the pressure disc is electrically connected to the rupture disc at at least one point, in which case, yet further optionally, wherein the point includes a weld; or
f) wherein the seating element is electrically-conductive, in which case, optionally, wherein the pressure disc is in electrical communication with the seating element, in which case, yet further optionally, wherein the seating element secures the electrically-insulating ring to the pressure disc by a crimp at a periphery of the seating device; or
g) the seating element defines a seating element conduit; or
h) the rupture disc defines the conduit; or
i) wherein the electrical connection between the rupture disc and the pressure disc is severed when a gauge pressure applied to a surface of the pressure disc facing the rupture disc is in a range of between about 4 kg/cm² and about 9 kg/cm² or between about 7 kg/cm² and about 9 kg/cm².

9. A battery that includes a current interrupt device as claimed in anyone of claims 1 to 8.

10. The battery of claim 9, wherein the modular current interrupt device is at a recessed portion of a lid of the battery, the recessed portion defining an opening in the lid, in which case, optionally, wherein the modular current interrupt device is a component of a positive terminal of the battery, in which case, further optionally, wherein at least one lead of a positive terminal of the battery is in electrical communication with the rupture disc of the modular current interrupt device; in which case, yet further optionally.
38. The battery of claim 37, wherein the battery is a lithium-ion based battery.

11. A method of forming a modular current interrupt device, as claimed in anyone of claims 1 to 8, comprising the steps of:
a) combining a pressure disc and a seating element;
b) combining a rupture disc and an electrically-insulating ring;
c) assembling the combined pressure disc and seating element, and the combined rupture disc and electrically-insulating ring; and
d) laser or resistance spot welding of the rupture disc to the pressure disc to form an electrical pathway therebetween.

12. A method of forming a battery as claimed in either of claims 9 and 10, comprising the steps of :
a) combining a pressure disc and a seating element;
b) combining a rupture disc and an electrically-insulating ring;
c) assembling the combined pressure disc and seating element, and the combined rupture disc and electrically-insulating ring;
d) laser or resistance spot welding of the rupture disc to the pressure disc to form an electrical pathway therebetween; and
e) placing the modular current interrupt device within a recessed portion of a lid of the battery, wherein the recessed portion defines an opening of the lid.

13. The method of claim 12, further including the step of joining the seating element to the lid at the recessed portion of the lid.

## Patentansprüche

1. Modulare Stromunterbrechungsvorrichtung für eine Batterie, die Folgendes umfasst:
a) eine elektrisch leitfähige Berstscheibe;
b) eine elektrisch leitfähige Druckscheibe, die so an der Berstscheibe befestigt ist, dass ein elektrischer Pfad gebildet wird;
c) einen elektrisch isolierenden Ring, der einen Umfang der Berstscheibe von einem Umfang der Druckscheibe abtrennt; und
d) ein Sitzelement, wobei das Sitzelement den elektrisch isolierenden Ring auf der Druckscheibe sichert; und wobei die Berstscheibe und der elektrisch isolierende Ring zusammen eine Leitung bilden, sodass die Druckscheibe von der Berstscheibe getrennt wird, wenn eine Seite der Druckscheibe ausreichendem Druck durch die Leitung ausgesetzt wird, um somit den elektrischen Pfad zu durchtrennen; wobei das Sitzelement elektrisch leitfähig ist und elektrisch mit der Druckscheibe verbunden ist.

2. Stromunterbrechungsvorrichtung nach Anspruch 1, wobei die Berstscheibe eine Vielzahl von Haltepunkten umfasst, welche eine Presspassung mit dem elektrisch isolierenden Ring bilden.

3. Stromunterbrechungsvorrichtung nach Anspruch 2, wobei der Umfang der Berstscheibe ein Polygon ist.

4. Stromunterbrechungsvorrichtung nach Anspruch 3, wobei das Polygon die Haltepunkte bildet.

5. Stromunterbrechungsvorrichtung nach Anspruch 3, wobei das Polygon zwischen 10 Seiten und 20 Seiten hat.

6. Stromunterbrechungsvorrichtung nach Anspruch 5, wobei das Polygon 14 Seiten hat.

7. Stromunterbrechungsvorrichtung nach Anspruch 1, wobei a) die Leitung teilweise durch den Umfang der Berstscheibe gebildet wird; in diesem Fall gilt optional entweder:
i) wobei der Umfang der Berstscheibe abgefast ist, oder
ii) wobei der Umfang der Berstscheibe eine Doppelfase umfasst; in letzterem Fall gilt optional:
wobei der Winkel von mindestens einer der Fasen in einem Bereich zwischen ca. 40 Grad und ca. 55 Grad liegt; in diesem Fall gilt weiter optional:
wobei der Winkel von mindestens einer der Fasen ca. 47 Grad beträgt; in diesem Fall gilt weiter optional:
wobei der Winkel beider Fasen ca. 47 Grad beträgt; oder
b) wobei der elektrisch isolierende Ring eine Lippe an einem Umfang des Ringes bildet, wodurch die Lippe den Umfang der Berstscheibe überlappt; in diesem Fall gilt optional:
wobei die Berstscheibe eine Nut am Umfang der Berstscheibe bildet, wodurch die Lippe des isolierenden Ringes die Berstscheibe an der Nut überlappt; in diesem Fall gilt weiter optional:
wobei eine Fläche der Lippe des isolierendes Ringes im Wesentlichen bündig mit einer Fläche der Berstscheibe abschließt; oder
c) der elektrisch isolierende Ring bildet mindestens einen Kanal, der zusammen mit der Berstscheibe mindestens einen Teil der Leitung bildet; in diesem Fall gilt optional:
wobei der Kanal eine Hauptachse hat, die im Wesentlichen senkrecht zu einer Tangente eines Kreises liegt, der durch den elektrisch isolierenden Ring gebildet wird.

8. Stromunterbrechungsvorrichtung nach Anspruch 1, wobei
a) die Berstscheibe, die Druckscheibe und das Sitzelement aus Aluminium bestehen; oder
b) der elektrisch isolierende Ring ein Polymer umfasst; oder
c) die Berstscheibe mindestens eine Leitung bildet; oder
d) der elektrisch isolierende Ring mindestens eine Leitung an einem Umfang des Ringes bildet, wodurch eine Fluidübertragung zwischen der kegelstumpfförmigen Komponente der Druckscheibe und einer äußeren Fläche der Stromunterbrechungsvorrichtung besteht; oder
e) wobei die Druckscheibe eine kegelstumpfförmigen Komponente umfasst; in diesem Fall gilt optional:
wobei die Druckscheibe weiter eine distale Fläche und eine umlaufende Basis umfasst, wobei die erhöhte Fläche durch die kegelstumpfförmige Komponente mit der umlaufenden Basis verbunden ist, und wobei die Berstscheibe an der erhöhten Fläche elektrisch mit der Druckscheibe verbunden ist; in diesem Fall gilt weiter optional:
wobei die Druckscheibe an mindestens einem Punkt elektrisch mit der Berstscheibe verbunden ist; in diesem Fall gilt weiter optional:
wobei der Punkt eine Schweißnaht umfasst; oder
f) wobei das Sitzelement elektrisch leitfähig ist; in diesem Fall gilt optional:
wobei die Druckscheibe elektrisch mit dem Sitzelement in Verbindung steht; in diesem Fall gilt weiter optional:
wobei das Sitzelement den elektrisch isolierenden Ring durch eine Klemmverbindung am Umfang der Sitzvorrichtung an der Druckscheibe sichert; oder
g) das Sitzelement bildet eine Sitzelement-Leitung; oder
h) die Berstscheibe bildet die Leitung; oder
i) wobei die elektrische Verbindung zwischen der Berstscheibe und der Druckscheibe getrennt wird, wenn ein Manometerdruck, der auf eine Fläche der Druckscheibe einwirkt, die zu der Berstscheibe hin zeigt, in einem Bereich zwischen ca. 4 kg/cm² und ca. 9 kg/cm² oder zwischen ca. 7 kg/cm² und ca. 9 kg/cm² liegt.

9. Batterie, die eine Stromunterbrechungsvorrichtung nach einem der Ansprüche 1 bis 8 umfasst.

10. Batterie nach Anspruch 9, wobei die modulare Stromunterbrechungsvorrichtung sich in einem vertieften Teil eines Deckels der Batterie befindet, wobei der vertiefte Teil eine Öffnung in dem Deckel bildet; in diesem Fall gilt optional:
wobei die modulare Stromunterbrechungsvorrichtung eine Komponente eines positiven Anschlusspols der Batterie ist; in diesem Fall gilt weiter optional:
wobei mindestens eine Ader eines positiven Anschlusspols der Batterie elektrisch mit der Berstscheibe der modularen Stromunterbrechungsvorrichtung in Verbindung steht; in diesem Fall gilt weiter optional:
38. Batterie nach Anspruch 37, wobei die Batterie eine Batterie auf Lithium-Ionen-Basis ist.

11. Verfahren zum Bilden einer modularen Stromunterbrechungsvorrichtung nach einem der Ansprüche 1 bis 8, welches folgende Schritte umfasst:
a) Kombinieren einer Druckscheibe und eines Sitzelements;
b) Kombinieren einer Berstscheibe und eines elektrisch isolierenden Ringes;
c) Zusammenfügen der Kombination aus Druckscheibe und Sitzelement und der Kombination aus Berstscheibe und elektrisch isolierendem Ring; und
d) Laser- oder Widerstandspunktschweißen der Berstscheibe an die Druckscheibe, um einen elektrischen Pfad zwischen diesen zu bilden.

12. Verfahren zum Bilden einer Batterie nach einem der Ansprüche 9 oder 10, welches folgende Schritte umfasst:
a) Kombinieren einer Druckscheibe und eines Sitzelements;
b) Kombinieren einer Berstscheibe und eines elektrisch isolierenden Ringes;
c) Zusammenfügen der Kombination aus Druckscheibe und Sitzelement und der Kombination aus Berstscheibe und elektrisch isolierendem Ring;
d) Laser- oder Widerstandspunktschweißen der Berstscheibe an die Druckscheibe, um einen elektrischen Pfad zwischen diesen zu bilden; und
e) Platzieren der modularen Stromunterbrechungsvorrichtung in einem vertieften Teil eines Deckels der Batterie, wobei der vertiefte Teil eine Öffnung des Deckels bildet.

13. Verfahren nach Anspruch 12, das weiter den Schritt des Zusammenfügens des Sitzelements mit dem Deckel an dem vertieften Teil des Deckels umfasst.

## Revendications

1. Appareil modulaire d'interruption de courant pour une batterie, comprenant :
a) un disque de rupture électriquement conducteur ;
b) un disque de pression électriquement conducteur attaché au disque de rupture pour former un trajet électrique ;
c) un anneau électriquement isolant séparant un périmètre du disque de rupture d'un périmètre du disque de pression ; et
d) un élément d'assise, l'élément d'assise fixant l'anneau électriquement isolant au disque de pression, dans lequel l'élément d'assise est électriquement conducteur et électriquement connecté au disque de pression ; et
dans lequel le disque de rupture et l'anneau électriquement isolant définissent ensemble un conduit,
où l'exposition d'un côté du disque de pression à une force suffisante à travers le conduit force le disque de pression à se séparer du disque de rupture, ce qui coupe le trajet électrique.

2. Appareil d'interruption de courant selon la revendication 1, dans lequel le disque de rupture inclut plusieurs points de rétention qui forment un ajustement serré avec l'anneau électriquement isolant.

3. Appareil d'interruption de courant selon la revendication 2, dans lequel le périmètre du disque de rupture est un polygone.

4. Appareil d'interruption de courant selon la revendication 3, dans lequel le polygone définit les points de rétention.

5. Appareil d'interruption de courant selon la revendication 3, dans lequel le polygone a de 10 à 20 côtés.

6. Appareil d'interruption de courant selon la revendication 5, dans lequel le polygone a 14 côtés.

7. Appareil d'interruption de courant selon la revendication 1, dans lequel :
a) le conduit est défini en partie par le périmètre du disque de rupture, auquel cas, facultativement, soit :
i) le périmètre du disque de rupture est biseauté, soit
ii) le périmètre du disque de rupture inclut un double biseau, auquel cas, facultativement, l'angle d'au moins un des biseaux est dans une gamme d'environ 40° à environ 55°, auquel cas, facultativement, l'angle d'au moins un des biseaux est d'environ 47°, auquel cas, facultativement, l'angle des deux biseaux est d'environ 47° ; soit
b) l'anneau électriquement isolant définit une lèvre à une périphérie de l'anneau, où la lèvre chevauche la périphérie du disque de rupture, auquel cas, facultativement, le disque de rupture définit une fente à la périphérie du disque de rupture, où la lèvre de l'anneau isolant chevauche le disque de rupture au niveau de la fente, auquel cas, facultativement, une surface de la lèvre de l'anneau isolant affleure fondamentalement une surface du disque de rupture ; soit
c) l'anneau électriquement isolant définit au moins un canal qui, associé au disque de rupture, définit au moins une portion du conduit, auquel cas, facultativement, le canal a un axe principal qui est essentiellement normal à une tangente à un cercle défini par l'anneau électriquement isolant.

8. Appareil modulaire d'interruption de courant selon la revendication 1, dans lequel :
a) le disque de rupture, le disque de pression et l'élément d'assise sont en aluminium ; ou
b) l'anneau électriquement isolant inclut un polymère ; ou
c) le disque de rupture définit au moins un conduit ; ou
d) l'anneau électriquement isolant définit au moins un conduit à uen périphérie de l'anneau, dans lequel il existe une communication fluidique entre le composant frustoconique du disque de pression et une surface externe du dispositif d'interruption de courant ; ou
e) le disque de pression inclut un composant frustoconique ; auquel cas le disque de pression inclut facultativement une surface distale et une base périphérique, la surface élevée étant liée à la base périphérique par le composant frustoconique et le disque de rupture est électriquement connecté au disque de pression au niveau de la surface élevée, auquel cas, facultativement, le disque de pression est électriquement connecté au disque de rupture en au moins un point, auquel cas, facultativement, le point inclut une soudure ; ou
f) l'élément d'assise est électriquement conducteur, auquel cas, facultativement, le disque de pression est en communication électrique avec l'élément d'assise, auquel cas, facultativement, l'élément d'assise fixe l'anneau électriquement isolant au disque de pression par une pince à une périphérie du dispositif d'assise ; ou
g) l'élément d'assise définit un conduit d'élément d'assise ; ou
h) le disque de rupture définit le conduit ; ou
i) la connexion électrique entre le disque de rupture et le disque de pression est coupée quand une pression de jauge est appliquée à une surface de la pression de disque face au disque de rupture dans une gamme entre environ 4 kg/cm² 2 et environ 9 kg/cm² ou entre 7 kg/cm² et environ 9 kg/cm².

9. Batterie incluant un appareil d'interruption de courant selon l'une quelconque des revendications 1 à 8.

10. Batterie selon l'une quelconque de la revendication 9, dans lequel l'appareil modulaire d'interruption de courant se situe au niveau d'une portion encastrée d'un couvercle de la batterie, la portion encastrée définissant une ouverture dans le couvercle, auquel cas, facultativement, l'appareil modulaire d'interruption de courant est un composant d'une borne positive de la batterie, auquel cas, facultativement, au moins un plomb d'une borne positive de la batterie est en communication électrique avec le disque de rupture de l'appareil modulaire d'interruption de courant, auquel cas, facultativement, la batterie est une batterie lithium-ion.

11. Procédé de formation d'un appareil modulaire d'interruption de courant selon l'une quelconque des revendications 1 à 8, comprenant les étapes de :
a) combiner un disque de pression et un élément d'assise ;
b) combiner un disque de rupture et un anneau électriquement isolant ;
c) assembler le disque de pression combiné à l'élément d'assise avec le disque de rupture combiné à l'anneau isolant ; et
d) souder au laser ou par résistance électrique du disque de rupture au disque de pression pour former un trajet électrique entre eux.

12. Procédé de formation d'une batterie selon l'une des revendications 9 et 10, comprenant les étapes de :
a) combiner un disque de pression et un élément d'assise ;
b) combiner un disque de rupture et un anneau électriquement isolant ;
c) assembler le disque de pression combiné à l'élément d'assise avec le disque de rupture combiné à l'anneau isolant ;
d) souder au laser ou par résistance électrique du disque de rupture au disque de pression pour former un trajet électrique entre eux ; et
e) placer l'appareil modulaire d'interruption de courant dans une portion encastrée d'un couvercle de la batterie, où la portion encastrée définit une ouverture du couvercle.

13. Procédé selon la revendication 12 incluant l'étape de joindre l'élément d'assise du couvercle à la portion encastrée du couvercle.
